# EUROPÄISCHE PATENTANMELDUNG

(11) **EP 3 263 377 A1**
(43) Veröffentlichungstag der Anmeldung: **03.01.2018**
(21) Anmeldenummer: 17173845.3
(22) Anmeldetag: 31.05.2017
(51) Int. Cl.: B60J 7/00

(54) **SEITENBLENDENANORDNUNG FÜR EIN ÖFFNUNGSFÄHIGES DACHSYSTEM UND ÖFFNUNGSFÄHIGES DACHSYSTEM EINES KRAFTFAHRZEUGS**

(30) Priorität: 27.06.2016 DE 102016211537
(71) Anmelder: BOS GmbH & Co. KG, 73760 Ostfildern (DE)
(72) Erfinder: Arnold, Rainer, 63679 Schotten (DE); Eberst, Hartmut, 73529 Schwäbisch Gmünd (DE)
(74) Vertreter: Patentanwälte Ruff, Wilhelm, Beier, Dauster & Partner mbB

(57) **Zusammenfassung**

Eine Seitenblendenanordnung für ein öffnungsfähiges Dachsystem eines Kraftfahrzeugs mit einem Blendenblatt, das zwischen einer abgesenkten Ruhestellung und einer aufgestellten Funktionsposition schwenkbeweglich gelagert ist, das zwei zueinander in Längsrichtung des Blendenblatts beabstandete Lagerstellen aufweist, und das in Richtung der aufgestellten Funktionsposition durch eine Federeinrichtung beaufschlagt ist, ist bekannt.Erfindungsgemäß ist eine vordere Lagerstelle stirnseitig an dem Blendenblatt angeordnet und eine hintere Lagerstelle ist mit der Federeinrichtung versehen. Einsatz bei Personenkraftwagen

## Beschreibung

Die Erfindung betrifft eine Seitenblendenanordnung für ein öffnungsfähiges Dachsystem eines Kraftfahrzeugs mit einem Blendenblatt, das zwischen einer abgesenkten Ruhestellung und einer aufgestellten Funktionsposition schwenkbeweglich gelagert ist, das zwei zueinander in Längsrichtung des Blendenblatts beabstandete Lagerstellen aufweist, und das in Richtung der aufgestellten Funktionsposition durch eine Federeinrichtung beaufschlagt ist.

Die Erfindung betrifft zudem ein öffnungsfähiges Dachsystem eines Kraftfahrzeugs mit einem zwischen einer Schließstellung und einer Öffnungsstellung verlagerbaren Dachteil, sowie mit wenigstens einer derartigen Seitenblendenanordnung.

Eine derartige Seitenblendenanordnung ist aus der DE 10 2011 119 991 B3 bekannt. Die Seitenblendenanordnung erstreckt sich seitlich längs eines Dachausschnitts eines Fahrzeugdachs, der durch ein bewegliches Dachteil freigebbar oder verschließbar ist. Die Seitenblendenanordnung ist mittels einer Schwenklagerung in einem dachfesten Führungsschienenbereich für das bewegliche Dachteil schwenkbeweglich gelagert. Die Schwenklagerung weist eine gekrümmte oder gewölbte Schwenkachse auf. Die Seitenblendenanordnung ist aus mehreren, in Längsrichtung aneinanderschließenden Blendenabschnitten zusammengesetzt.

Aufgabe der Erfindung ist es, eine Seitenblendenanordnung der eingangs genannten Art zu schaffen, die einen geringen Bauraum benötigt.

Diese Aufgabe wird dadurch gelöst, dass eine vordere Lagerstelle stirnseitig an dem Blendenblatt angeordnet ist, und dass eine hintere Lagerstelle mit der Federeinrichtung versehen ist. Durch die stirnseitige Lagerung des Blendenblatts im Bereich der vorderen Lagerstelle ergibt sich eine besonders platzsparende und dennoch funktionssichere Lagerung. Die stirnseitige Anordnung der vorderen Lagerstelle bewirkt zudem reduzierte Biegemomente auf das Blendenblatt. Durch die stirnseitige vordere Lagerung ist es ausreichend, wenn lediglich die hintere Lagerstelle mit der Federeinrichtung versehen ist. Vorzugsweise ist die Federeinrichtung mechanisch ausgeführt. In vorteilhafter Weise sind die vordere und die hintere Lagerstelle derart zueinander ausgerichtet, dass sie eine gemeinsame, einzige geradlinige Schwenkachse für das Blendenblatt definieren. Die Federeinrichtung wirkt in Aufstellrichtung des Blendenblatts.

In Ausgestaltung der Erfindung ist das Blendenblatt im Bereich der hinteren Lagerstelle mit einer Versteifung versehen. Die Versteifung kann einstückig in dem Blendenblatt ausgeformt sein. Alternativ kann die Versteifung durch wenigstens einen separat hergestellten, auf das Blendenblatt aufgebrachten Versteifungsabschnitt gebildet sein. Wenn die Versteifung einstückig in dem Blendenblatt integriert ist, ist das Blendenblatt vorzugsweise aus Kunststoff plattenartig hergestellt und weist wenigstens eine Sicke oder Auswölbung auf, die als Versteifung dient.

In weiterer Ausgestaltung der Erfindung weisen sowohl die vordere als auch die hintere Lagerstelle einen dachfesten Lagerabschnitt auf, die in betriebsfertig montiertem Zustand jeweils mit einer Trägerfläche des Dachsystems verklebt sind. Der jeweilige Lagerabschnitt der beiden Lagerstellen des Blendenblatts ist vorzugsweise als flacher, plattenartiger Lagerflansch ausgeführt, der mittels eines Flüssigklebstoffes, mittels einer doppelseitigen Klebefolie, mittels eines Heißklebers oder in ähnlicher Art und Weise mit der Trägerfläche des Dachsystems verklebt ist. Als Trägerfläche des Dachsystems ist vorzugsweise ein Profilflächenabschnitt eines Führungsschienensystems vorgesehen, das zur Verlagerung des beweglichen Dachteils dient, und das seitlich neben dem Dachausschnitt angeordnet ist, der durch das bewegliche Dachteil verschließbar ist.

In weiterer Ausgestaltung der Erfindung weist die Federeinrichtung eine Schenkelfeder auf, die an dem Blendenblatt im Bereich der Versteifung abgestützt ist. Durch diese Ausgestaltung ist eine besonders gute permanente Drehmomentübertragung der Federkräfte der Schenkelfeder auf das Blendenblatt erzielbar. Vorzugsweise weist die Schenkelfeder einen bügelförmigen Schenkel auf, der sich im Bereich der Versteifung an dem Blendenblatt abstützt, und der mit seinen gegenüberliegenden Schenkelenden in zwei zueinander koaxiale Schraubenwendelbereiche der Schenkelfeder übergeht. Entsprechende Enden der Schraubenwendelbereiche sind jeweils an dem dachfesten Lagerabschnitt der hinteren Lagerstelle abgestützt.

Aufgabe der Erfindung ist es zudem, ein öffnungsfähiges Dachsystem der eingangs genannten Art zu schaffen, das in Seitenbereichen des verlagerbaren Dachteils einen guten Blick- und Geräuschschutz bildet.

Für das öffnungsfähige Dachsystem wird die der Erfindung zugrunde liegende Aufgabe dadurch gelöst, dass der Dachteil im Bereich einer Unterseite wenigstens ein Dichtprofil aufweist, das mit der Seitenblendenanordnung bei einer Öffnungs- oder Schließbewegung des Dachteils zusammenwirkt.

Das Dichtprofil ist vorzugsweise steg- oder leistenartig ausgeführt und ragt von der Unterseite des Dachteils aus nach unten ab. Vorzugsweise ist jeder Seitenblendenanordnung jeweils ein entsprechendes Dichtprofil zugeordnet, so dass bei zwei Seitenblendenanordnungen im Bereich von gegenüberliegenden Längsseiten des Dachsystems dem Dachteil zwei an seinen Seitenbereichen nach unten abragende Dichtprofile zugeordnet sind. Die Dichtprofile können aus Kunststoff hergestellt sein. Vorzugsweise weist das jeweilige Dichtprofil eine gewisse elastische Flexibilität auf, um eine sichere Anlage und ein verschleißarmes Entlanggleiten an der jeweiligen Seitenblendenanordnung zu erzielen. Das jeweilige Dichtprofil wirkt mit der zugeordneten Seitenblendenanordnung bei einer Verlagerung des Dachteiles zusammen, indem es von oben auf entsprechende Seitenflächen des Blendenblattes drückt und so eine Verschwenkung des Blendenblattes bewirkt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Dachsystems in geschlossenem Zustand,
- Fig. 2: in vergrößerter perspektivischer Darstellung einen Ausschnitt des Dachsystems nach Fig. 1 unter Weglassung eines beweglichen Dachteils des Dachsystems,
- Fig. 3: in weiter vergrößerter perspektivischer Darstellung einen Ausschnitt der Darstellung nach Fig. 2 im Bereich einer - in normaler Fahrtrichtung gesehen - linken Seitenblendenanordnung,
- Fig. 4: in anderer perspektivischer Darstellung schräg von innen her einen Ausschnitt der Seitenblendenanordnung gemäß Fig. 3 im Bereich einer hinteren Lagerstelle,
- Fig. 5: in weiter vergrößerter, perspektivischer Darstellung einen Bereich einer vorderen Lagerstelle der Seitenblendenanordnung gemäß Fig. 4,
- Fig. 6: in schematischer Querschnittsdarstellung das Dachsystem nach den Fig. 1 bis 5 im Bereich des Zusammenwirkens des beweglichen Dachteils mit der Seitenblendenanordnung und
- Fig. 7: eine Darstellung des Dachsystems gemäß den Fig. 1 bis 5 ähnlich Fig. 6 im Bereich einer hinteren Lagerstelle der Seitenblendenanordnung.

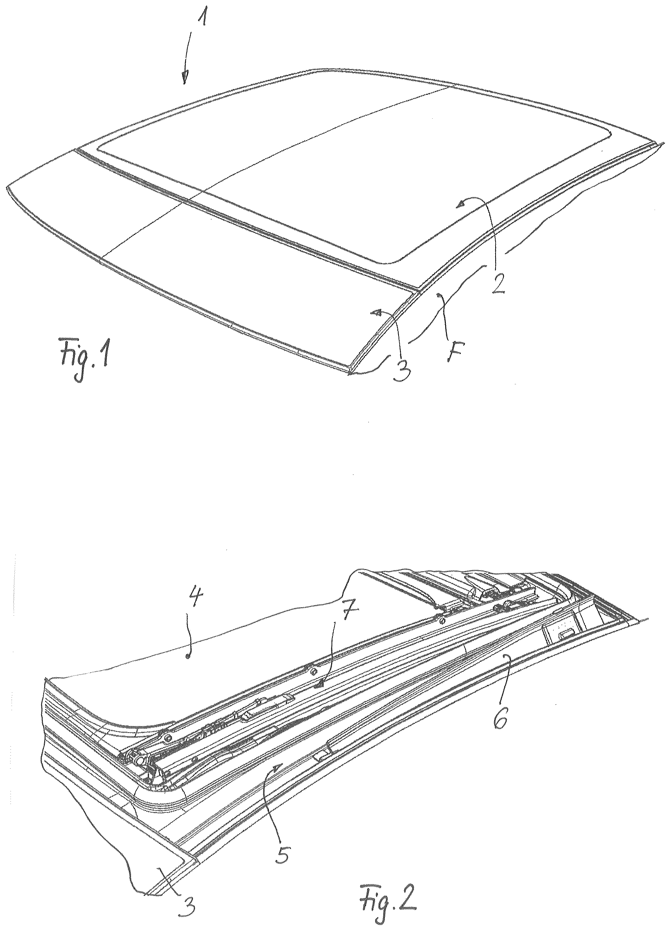

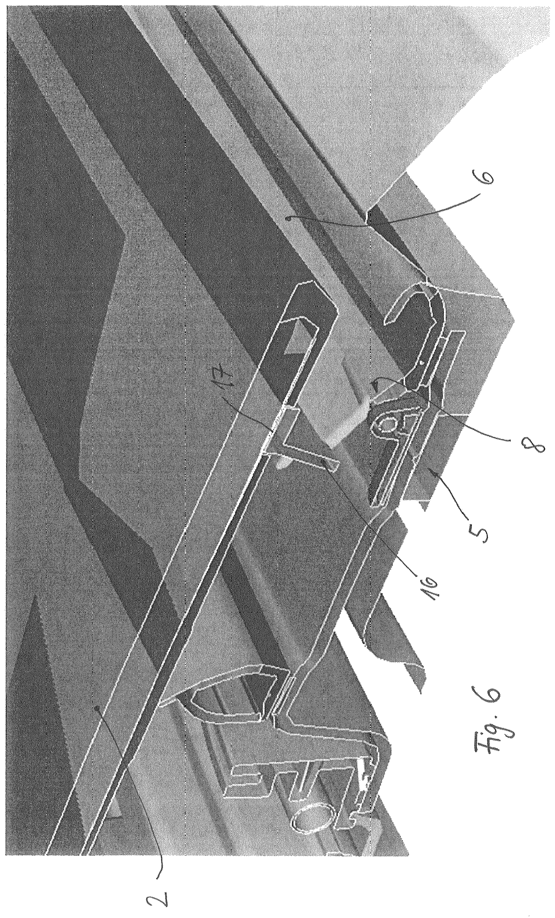

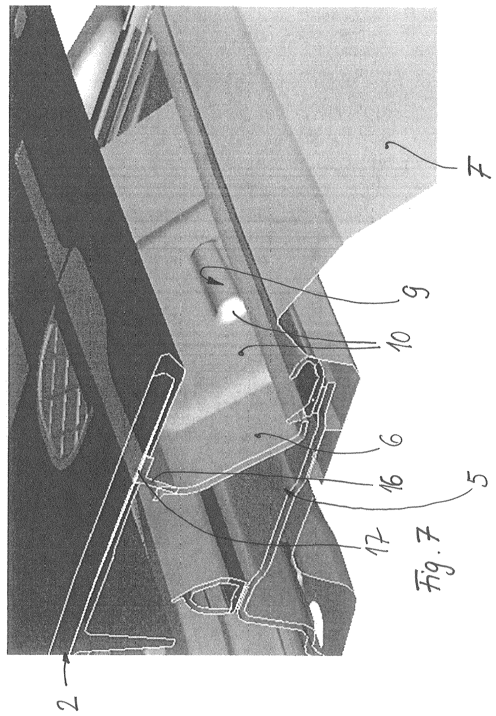

Ein Personenkraftwagen weist ein Fahrzeugdach F auf, das mit einem Dachsystem 1 gemäß den Fig. 1 bis 7 versehen ist. Das Dachsystem 1 weist einen Trägerrahmen 5 auf, der im montierten Zustand fest mit entsprechenden Dachkarosserieteilen des Fahrzeugdachs F verbunden ist. Der Trägerrahmen 5 umschließt einen Dachausschnitt 4, der eine Öffnung zu einem Fahrzeuginnenraum des Personenkraftwagens bildet. In normaler Fahrtrichtung gesehen nach vorne ist dem Trägerrahmen 5 eine Frontblende 3 zugeordnet, die einen Frontbereich des Trägerrahmens 5 überdeckt und an einen oberen Abschnitt eines Windschutzscheibenrahmens des Personenkraftwagens anschließt. Der Dachausschnitt 4 ist durch ein deckelförmiges bewegliches Dachteil 2 verschließbar oder freigebbar. Das bewegliche Dachteil 2 ist zwischen einer Schließstellung (Fig. 1) und wenigstens einer Öffnungsstellung (Fig. 6 und 7) mithilfe einer Führungsmechanik 7 an jeweils einem gegenüberliegenden Seitenbereich des Trägerrahmens 5 verlagerbar geführt. Dabei ist das Dachteil 2 aus einer Schließstellung zunächst in eine Lüfterstellung überführbar, in der das Dachteil 2 schräg nach oben und nach hinten ausgestellt ist. In der Öffnungsstellung ist das Dachteil 2 mittels der beiden Führungsmechaniken 7 an den gegenüberliegenden Längsseiten des Trägerrahmens 5 nach hinten über einen rückseitigen, feststehenden Dachbereich hinweg nach oben ausgestellt und zu einer Rückseite des Dachsystems 1 hin verlagert.

Um in der Lüfterstellung des Dachteils 2 wie auch in der Öffnungsstellung des Dachteils 2 einen Blickschutz sowie einen Geräuschschutz zu erzielen, ist dem Trägerrahmen 5 beidseitig des Dachausschnitts 4 jeweils eine Seitenblendenanordnung zugeordnet. Die gegenüberliegenden Seitenblendenanordnungen sind spiegelsymmetrisch zu einer vertikalen Fahrzeugmittellängsebene, im Übrigen jedoch identisch zueinander gestaltet und gelagert. Nachfolgend wird lediglich die in Fahrtrichtung gesehen linke Seitenblendenanordnung detailliert beschrieben. Für die gegenüberliegende, rechte Seitenblendenanordnung gilt das Gesagte in gleicher Weise.

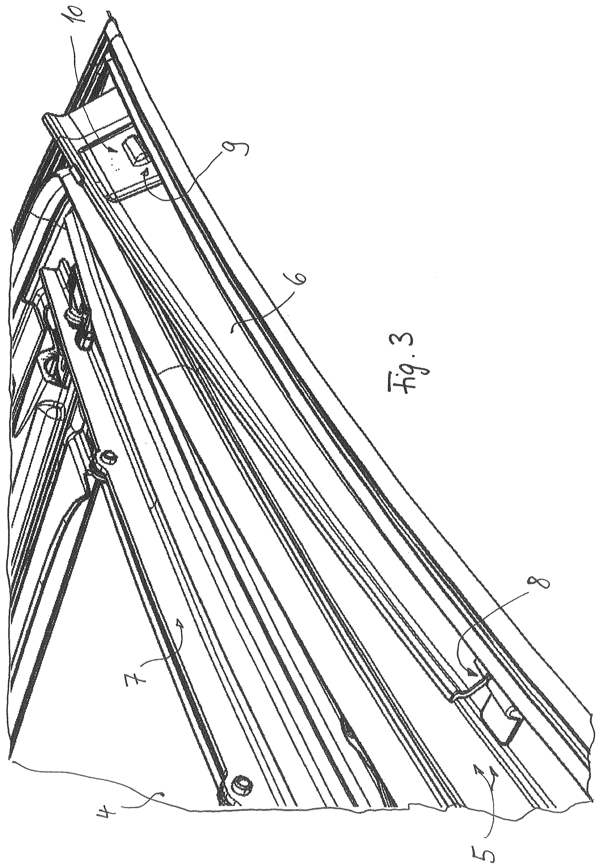

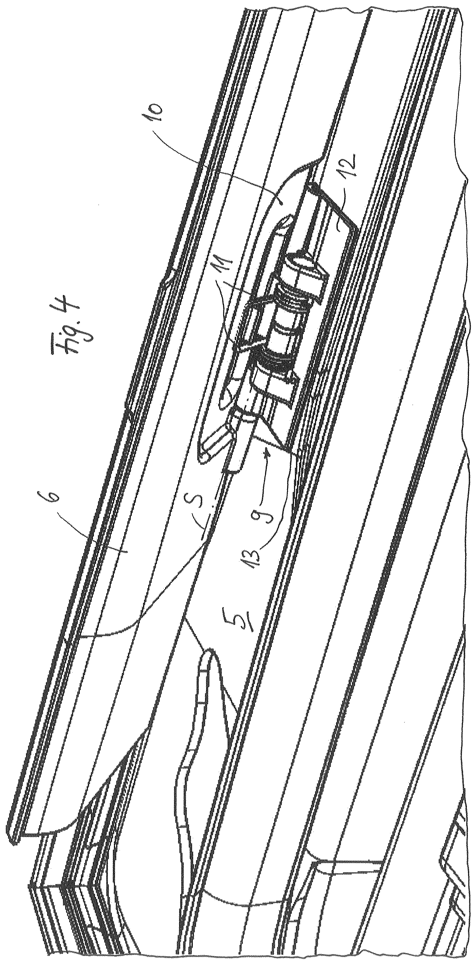

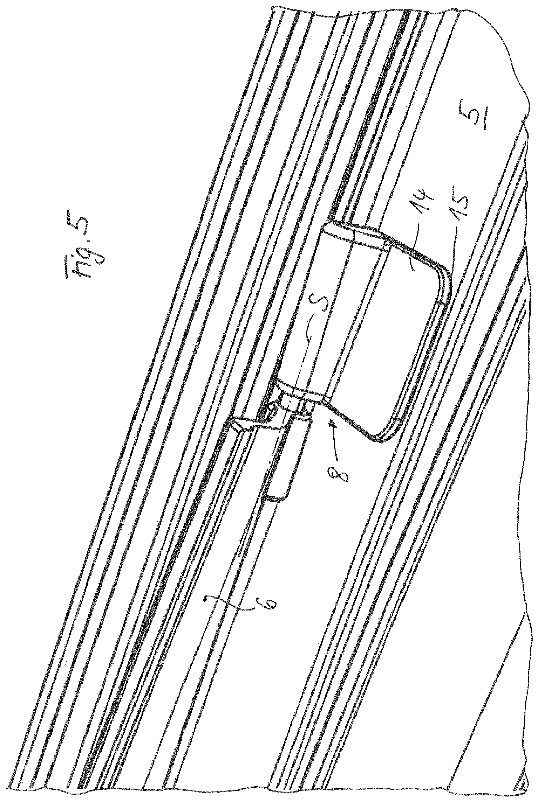

Die Seitenblendenanordnung weist ein einstückiges Blendenblatt 6 auf, das zumindest weitgehend formstabil ausgeführt und aus einem Kunststoff oder einer Leichtmetalllegierung hergestellt ist. Das Blendenblatt 6 weist eine im Wesentlichen trapezförmige Grundfläche auf, wobei das Blendenblatt 6 eine sich von vorne nach hinten allmählich vergrößernde Höhe aufweist - auf seinen aufgestellten Funktionszustand bezogen. Das Blendenblatt 6 ist im Bereich einer vorderen Lagerstelle 8 sowie im Bereich einer hinteren Lagerstelle 9 schwenkbeweglich gelagert. Die vordere Lagerstelle 8 und die hintere Lagerstelle 9 definieren eine gemeinsame, in Längsrichtung des Trägerrahmens 5 erstreckte Schwenkachse. Die Schwenkachse erstreckt sich zumindest weitgehend in Fahrzeuglängsrichtung. Die vordere Lagerstelle 8 ist, wie anhand der Fig. 3 und 5 gut erkennbar ist, stirnseitig an dem Blendenblatt 6 der Seitenblendenanordnung vorgesehen. Hierzu ist ein nicht näher bezeichneter Schwenklagerzapfen koaxial zu der Schwenkachse von einem vorderen Stirnendbereich des Blendenblatts 6 aus nach vorne erstreckt. Dieser Schwenklagerzapfen ist in einem Lagerflansch der Lagerstelle 8 aufgenommen, der einen dachfesten Lagerabschnitt der vorderen Lagerstelle 8 bildet. Der Lagerflansch weist eine Auflageplatte 14 auf, die mittels einer Klebstoffschicht 15 auf einer Trägerfläche des Trägerrahmens 5 flächig befestigt ist. Die gemeinsame Schwenkachse S ist anhand der Fig. 4 und 5 angedeutet.

Die hintere Lagerstelle 9 weist einen dachfest gehaltenen Lagerflansch 12 auf, der mittels eines nicht erkennbaren, zur Schwenkachse S koaxialen Schwenklagerzapfens mit einer am Blendenblatt 6 vorgesehenen Zapfenaufnahme schwenkbeweglich verbunden ist. Der auch als Lagerabschnitt bezeichnete Lagerflansch 12 weist eine ebene Bodenplatte auf, die mittels einer Klebstoffschicht 13 flächig mit der Trägerfläche des Trägerrahmens 5 verbunden ist. Auf dem Lagerflansch 12 ist zudem eine Federeinrichtung angeordnet, die eine Schenkelfeder 11 umfasst. Die Schenkelfeder 11 ist anhand der Fig. 4 gut erkennbar und ist mittels einer nicht näher bezeichneten Lagereinrichtung auf dem Lagerflansch 12 gehalten. Die Lagereinrichtung der Federeinrichtung, die die Schenkelfeder 11 trägt, weist für die Schenkelfeder 11 eine Drehachse auf, die parallel zu der Schwenkachse S ausgerichtet ist. Ein Bügelschenkel der Schenkelfeder 11 stützt sich von einer Innenseite her an dem Blendenblatt 6 der Seitenblendenanordnung ab. Das Blendenblatt 6 ist im Bereich der hinteren Lagerstelle 9 mit einer Versteifung 10 versehen, die als einstückig ausgeformte Auswölbung ausgeführt ist. Die Auswölbung wird durch eine entsprechende Profilierung des Blendenblatts 6 erzielt. Der Bügelschenkel der Schenkelfeder 11 stützt sich innenseitig im Bereich der Versteifung 10 an dem Blendenblatt 6 ab. Die Schenkelfeder 11 übt auf das Blendenblatt 6 ein permanentes Drehmoment in Richtung seiner aufgerichteten Funktionsstellung aus. Die Versteifung 10, die als Auswölbung gestaltet ist, ist zusätzlich mit einem Auswölbungsabschnitt auf Höhe der Lagereinrichtung für die Schenkelfeder 11 versehen. Der Auswölbungsabschnitt ist anhand der Fig. 3 und anhand der Fig. 7 gut erkennbar. In diesen Auswölbungsabschnitt taucht die Lagereinrichtung der Schenkelfeder 11 ein, wenn das Blendenblatt 6 sich in seiner nach unten gedrückten Ruhestellung befindet. Der Auswölbungsabschnitt verhindert demzufolge, dass das Blendenblatt 6 beim Nachinnen- und Nachuntenschwenken in Richtung der Ruhestellung auf einer Außenkontur der Lagereinrichtung für die Schenkelfeder 11 auftrifft, bevor das Blendenblatt 6 seine Ruhestellung erreicht hat.

Anhand der Fig. 6 und 7 ist erkennbar, dass sich das Blendenblatt 6 der Seitenblendenanordnung aufgrund der permanenten Federverspannung durch die Schenkelfeder von unten und von innen her an einem Dichtprofil 16 des beweglichen Dachteils 2 abstützt. Das Dichtprofil 16 weist einen L-förmigen Querschnitt auf und ist mit einem Halteabschnitt 17 an einer Unterseite des beweglichen Dachteils 2 befestigt. Ein Stützschenkel des Dichtprofils 16 ragt von der Unterseite des beweglichen Dachteils 2 aus nach unten ab. Das Dichtprofil 16 ist zumindest weitgehend formstabil gestaltet und ist vorzugsweise aus einem Kunststoffmaterial, vorzugsweise mit einer Elastomerkomponente, ausgeführt. Eine Steifigkeit des Dichtprofils 16 ist ausreichend groß, um auf die Außenseite des Blendenblatts 6 der Seitenblendenanordnung einen ausreichend großen Druck ausüben zu können, der die Aufstellkraft der Schenkelfeder 11 ausgleicht.

Anhand der Fig. 3 bis 5 ist erkennbar, dass ein oberer Längsrandbereich des Blendenblatts 6 der Seitenblendenanordnung im Querschnitt gesehen S- oder C-förmig gewölbt ist. Hierdurch ergibt sich eine verbesserte Anlage- und Stützfunktion zwischen dem Dichtprofil 16 des Dachteils 2 und dem Blendenblatt 6, während das Dachteil 2 sich in Richtung seiner Öffnungsstellung oder in Richtung seiner Schließstellung verlagert. Dadurch ist eine besonders gute, im Wesentlichen linienförmige Anlage des Blendenblatts 6 im Bereich einer Unterseite des zumindest begrenzt elastisch flexiblen Dichtprofils 16 des beweglichen Dachteils 2 erzielbar. Wenn das bewegliche Dachteil 2 in seine Schließstellung überführt wird, drückt das Dachprofil 16 das Blendenblatt 6 der Seitenblendenanordnung in seine untere Ruhestellung. Sobald das bewegliche Dachteil 2 in seine Lüfterstellung angehoben und/oder in seine Öffnungsstellung verfahren wird, stellt sich das Blendenblatt 6 aufgrund der Federvorspannung zumindest teilweise nach oben aus, wobei der Grad der Verschwenkung und Ausstellung des Blendenblatts nach oben abhängig ist von der Stützung des Blendenblatts 6 durch das Dichtprofil 16.

## Patentansprüche

1. Seitenblendenanordnung für ein öffnungsfähiges Dachsystem (1) eines Kraftfahrzeugs mit einem Blendenblatt (6), das zwischen einer abgesenkten Ruhestellung und einer aufgestellten Funktionsposition schwenkbeweglich gelagert ist, das zwei zueinander in Längsrichtung des Blendenblatts beabstandete Lagerstellen (8, 9) aufweist, und das in Richtung der aufgestellten Funktionsposition durch eine Federeinrichtung (11) beaufschlagt ist, **dadurch gekennzeichnet, dass** eine vordere Lagerstelle (8) stirnseitig an dem Blendenblatt (6) angeordnet ist, und dass eine hintere Lagerstelle (9) mit der Federeinrichtung (11) versehen ist.

2. Seitenblendenanordnung nach Anspruch 1, **dadurch gekennzeichnet, dass** das Blendenblatt (6) im Bereich der hinteren Lagerstelle (9) mit einer Versteifung (10) versehen ist.

3. Seitenblendenanordnung nach Anspruch 1 oder 2, **dadurch gekennzeichnet, dass** sowohl die vordere als auch die hintere Lagerstelle (8, 9) einen dachfesten Lagerabschnitt (12, 14) aufweisen, die in betriebsfertig montiertem Zustand jeweils mit einer Trägerfläche (5) des Dachsystems (1) verklebt sind.

4. Seitenblendenanordnung nach Anspruch 1, **dadurch gekennzeichnet, dass** die Federeinrichtung eine Schenkelfeder (11) aufweist, die an dem Blendenblatt (6) im Bereich der Versteifung (10) abgestützt ist.

5. Öffnungsfähiges Dachsystem (1) eines Kraftfahrzeugs mit einem zwischen einer Schließstellung und einer Öffnungsstellung verlagerbaren Dachteil (2), sowie mit wenigstens einer Seitenblendenanordnung nach einem der vorhergehenden Ansprüche, **dadurch gekennzeichnet, dass** das Dachteil (2) im Bereich einer Unterseite wenigstens ein Dichtprofil (16) aufweist, das mit der Seitenblendenanordnung (6) bei einer Öffnungs- oder Schließbewegung des Dachteils (2) zusammenwirkt.
